(19) **Europäisches Patentamt / European Patent Office / Office européen des brevets**

(11) **EP 3 876 180 A1**

(12) **EUROPEAN PATENT APPLICATION**

(43) Date of publication:
08.09.2021 Bulletin 2021/36

(51) Int Cl.:
*G06Q 40/04* (2012.01)     *G06Q 40/06* (2012.01)

(21) Application number: 20195267.8

(22) Date of filing: 09.09.2020

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 05.03.2020   JP 2020038078

(71) Applicants:
• **KABUSHIKI KAISHA TOSHIBA**
  **Minato-ku**
  **Tokyo**
  **105-0023 (JP)**
• **Toshiba Energy Systems & Solutions Corporation**
  **Saiwai-ku**
  **Kawasaki-shi**
  **Kanagawa 2120013 (JP)**

(72) Inventors:
• **Aisu, Hideyuki**
  **Tokyo, 105-0023 (JP)**
• **Shiga, Yoshiaki**
  **Tokyo, 105-0023 (JP)**
• **Shin, Hiromasa**
  **Tokyo, 105-0023 (JP)**
• **Yoshida, Takufumi**
  **Tokyo, 105-0023 (JP)**
• **Kimura, Kotaro**
  **Kanagawa, 212-0013 (JP)**

(74) Representative: **Hoffmann Eitle**
**Patent- und Rechtsanwälte PartmbB**
**Arabellastraße 30**
**81925 München (DE)**

(54) **INFORMATION PROCESSING APPARATUS, INFORMATION PROCESSING METHOD AND COMPUTER PROGRAM**

(57) According to one embodiment, an information processing apparatus includes: an index calculator configured to calculate at least one index depending on tentative trading volumes to be traded in a plurality of trading markets on a basis of trading result data including result values of trading price per unit volume in the plurality of trading markets; and a determiner configured to determine trading volumes to be traded in the plurality of trading markets on a basis of the index.

FIG. 1

EP 3 876 180 A1

**Description**

<u>FIELD</u>

Approaches of the present invention relate to an information processing apparatus, an information processing method, and a computer program.

<u>BACKGROUND</u>

As a scheme for designing a product portfolio in trading of financial instruments, the following schemes are known. A risk return index such as an expected value of earnings, a VaR (Value at Risk) and a CVaR (Conditional Value at Risk) is calculated using price result data of each type of financial instruments in a past fixed period or Monte Carlo simulation. Ownership proportions of the respective types of financial instruments are determined on the basis of investment strategy with reference to the calculated index.

It can be considered to construct a buying and selling portfolio while taking into account the risk return index by applying this scheme also to a trading target other than financial instruments, for example, trading (buying and selling) of electric power. However, sufficient effects cannot be expected with this scheme unless a holding period of each assumed product is sufficiently long. Because a trading target of electric power, or the like, cannot be basically stored, and only can be bought and sold in a short period, effects cannot be expected with the present scheme which assumes long-period holding.

<u>BRIEF DESCRIPTION OF THE DRAWINGS</u>

FIG. 1 is a block diagram of a trading support apparatus which is an information processing apparatus according to a first approach.
FIG. 2 is an explanatory diagram of a blind single-price auction system.
FIG. 3 is a view illustrating an example of case data stored in a case data storage in a tabular format.
FIG. 4 is a view illustrating an example of similar case data extracted by a similar case data extractor.
FIG. 5 is a view illustrating an example where case data is extracted in descending order of a similarity score.
FIG. 6 is a view illustrating an example where pseudo probability distribution of earnings is generated.
FIG. 7 is a view illustrating an example where similar case data which becomes a computation target is specified in a case where an index is calculated.
FIG. 8 is a view illustrating a table indicating a bid unit time frame, recommended strategy, a bid quantity proportion, and whether or not trade-off occurs.
FIG. 9 is a view illustrating an example where each risk return index is visualized and displayed.
FIG. 10 is a view illustrating predicted transition of each of spot market price and an average of intraday trading price.
FIG. 11 is a view illustrating an example of a case where trade-off does not occur and an example of a case where trade-off occurs.
FIG. 12 is a flowchart of an example of operation of the information processing apparatus according to the present approach.
FIG. 13 is a block diagram of a trading support apparatus which is an information processing apparatus according to a second approach.
FIG. 14 is a view illustrating an example of meteorological data.
FIG. 15 is a view illustrating an example of merged data.
FIG. 16 is a view illustrating a hardware configuration example of the apparatus in FIG. 1 or FIG. 13.

<u>DETAILED DESCRIPTION</u>

According to one approach, an information processing apparatus includes: an index calculator configured to calculate at least one index depending on tentative trading volumes to be traded in a plurality of trading markets on a basis of trading result data including result values of trading price per unit volume in the plurality of trading markets; and a determiner configured to determine trading volumes to be traded in the plurality of trading markets on a basis of the index.

Approaches of the present invention will be described below with reference to the drawings. While electric power traded in an electric power trading market is dealt as a product to be traded below, a target to be traded is not particularly limited to electric power. For example, in a case where water, gas, or the like, becomes a target to be traded, the product to be traded may be water, gas, or the like.

(First approach)

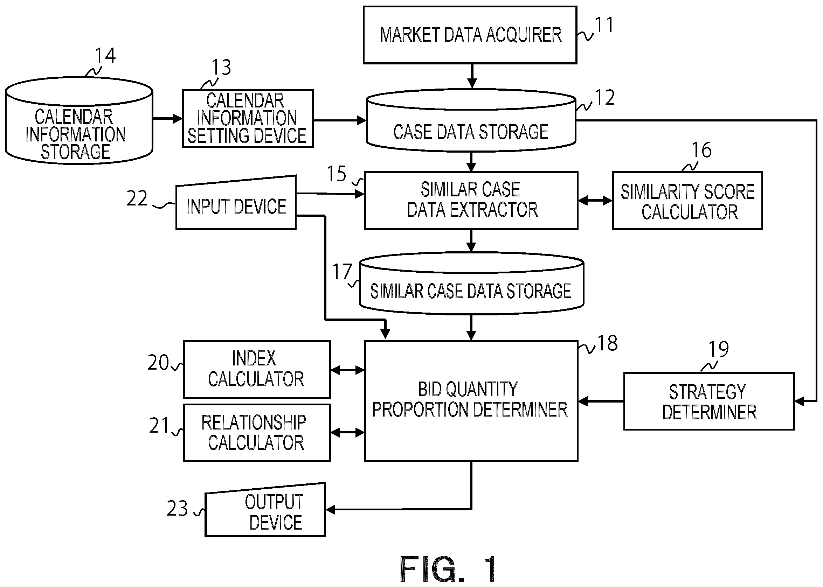

FIG. 1 is a block diagram illustrating a trading support apparatus which is an information processing apparatus according to a first approach. The trading support apparatus (hereinafter, the present apparatus) in FIG. 1 includes a market data acquirer 11, a case data storage 12, a calendar information setting device 13, a calendar information storage 14, a similar case data extractor 15, a similarity score calculator (similarity calculator) 16, a similar case data storage 17, a bid quantity proportion determiner (determiner) 18, a strategy determiner 19, an index calculator 20, a relationship calculator 21, an input device 22, and an output device 23. The present apparatus is connected to an electric power trading market system which is not illustrated via a communication network. The communication network is a wired network, a wireless network, or a hybrid thereof. The communication network is a local area network or a wide area network as an example.

The input device 22 accepts various kinds of instructions or input operation of data from a user of the present apparatus. The user is an operator, an administrator, or the like, of the present apparatus. Examples of data to be input by the user can include conditions such as a parameter which is required for processing of the present apparatus. Examples of the instructions to be input by the user can include an instruction of operation relating to visualization of data, or the like. The input device 22 is realized by, for example, a mouse, a keyboard, a touch panel, a trackball, a joystick, a pen tablet, a speech recognition apparatus, an image recognition apparatus or combination thereof. The input device 22 may be an information terminal such as a personal computer, a tablet, a smartphone, and a mobile phone. While FIG. 1 illustrates only one input device 22, there may be a plurality of input devices 22.

The output device 23 is a device which outputs input data. The output device 23 is a display device which can display data as an example. In this case, the output device 23 may be, for example, a liquid crystal display, an organic electroluminescent display, an LED (Light Emitting Diode) display, a CRT (Cathode Ray Tube) display, or a projector, or may be a display in other schemes. The output device 23 may be a printer which prints data on paper, or may be a transmitting device which transmits data in a wireless or wired manner. In the following description, a case will be assumed where the output device 23 is a display device.

The input device 22 and the output device 23 may be integrally configured with a personal computer, a tablet, a smartphone, or the like. Further, one or both of the input device 22 and the output device 23 may be integrally configured with the present apparatus.

As an external system of the present apparatus, there exists the electric power trading market system. The electric power trading market system holds result data (trading result data) of electric power trading. In the result data, past trading result values are associated with time information. Examples of the result values can include, for example, market price (electric power trading price), a bid quantity, or the like, of electric power traded in an electric power exchange. In the following description, it is assumed that the result values are market price of electric power.

Here, concerning electric power trading price, description will be provided using an example of the Japan Electric Power Exchange (JEPX). At the JEPX, a plurality of types of markets such as a day ahead market (spot trading market) in which electric power to be provided the next day is bought and sold, and a intraday trading market in which trading can be performed for adjustment up to one hour before actual demand and supply, are open. In a spot (day ahead) market, one day is divided into 48 time frames (product units) in measurement unit of electric power (that is, from 0 minute to 30 minutes, and from 30 minutes to 60 minutes for each hour), and electric power is traded for each time frame. Hereinafter, a time frame (product unit) to be sold and bought will be referred to as a bid unit time frame. A unit of an electric power to be traded is 1 MW (30 minutes) as an example, and this can be expressed as 500 kWh in electric power energy. Bid price can be designated in unit of 0.01 yen per kWh as an example.

In the spot trading market, bids for the bid unit time frames of the next day are closed at 10 o'clock every day. The respective bid unit time frames of the spot trading market are independent of each other, and contract price and a contract volume (or quantity) are determined for each bid unit time frame in a blind single-price auction system.

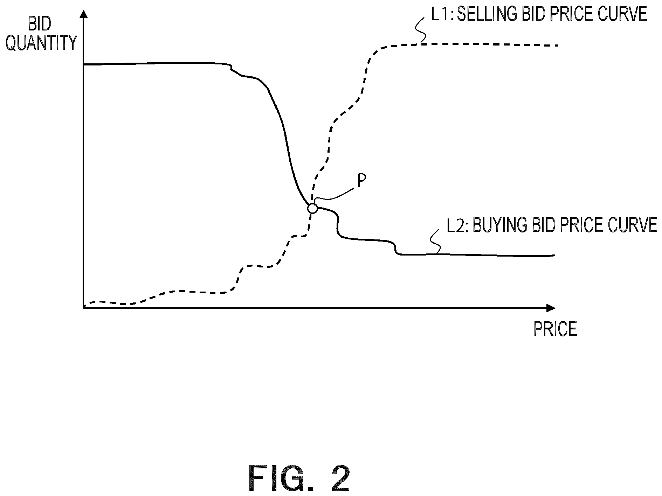

FIG. 2 is an explanatory diagram of the blind single-price auction system. Each participant who bids for a bid unit time frame bids in a (blind) state where bids by other participants are not disclosed. After bids are closed, a selling bid price curve L1 obtained by accumulating bid quantities from low price of a selling bid and a buying bid price curve L2 obtained by accumulating bid quantities from high price of a buying bid are calculated, and an intersection point P of them is calculated. The intersection point P becomes contract price and a contract volume of this bid unit time frame. Only a seller who bids at price lower than this contract price can sell a product (electric power) at the contract price, and only a buyer who bids at price higher than the contract price can buy a product (electric power) at the contract price.

Also in the intraday trading market, in a similar manner to the spot trading market, electric power corresponding to 24 hours is divided in units of 30 minutes, and sold and bought as 48 products. However, a continuous trading session method is used in which trading (bid and contract) is repeated in real time up to one hour before delivery for each product.

In this manner, there are a plurality of types of electric power trading markets in which selling and buying are possible for the same bid unit time frame (time frame). Different contract methods, and different bid closing time (gate closing time) are set at respective electric power trading markets, and there is a case where market price largely differs among the respective electric power trading markets for the same bid unit time frame (time frame). Because it is basically difficult to store electric power, and each market price uncertainly fluctuates, it is important to determine optimal bid quantity proportions in terms of a risk return index.

For example, as an example of a risk, there is a case where total selling price (total return) becomes low as a result of electric power being sold at low price, or a case where total buying price becomes high as a result of electric power is bought at high price. Further, as an example of return, there is a case where total selling price becomes high as a result of electric power is sold at high price, or a case where total buying price can be kept low as a result of electric power being bought at low price. Therefore, it is necessary to appropriately design distribution proportions of electric power energy to be sold and bought in the respective electric power trading markets for each bid unit time frame, that is, a market portfolio of electric power trading.

The market data acquirer 11 transmits a request for acquiring result data to the electric power trading market system and acquires result data including result values of electric power sold or bought in a plurality of electric power trading markets from the electric power trading market system. In the present approach, while two markets of a spot trading market and a intraday trading market are dealt as the plurality of electric power trading markets, the electric power trading markets are not limited to these.

Examples of the result value can include market price (trading price) of electric power traded for each bid unit time frame (trading date and time) at the electric power exchange. Further, examples of the result value can include a bid quantity, an electric power demand, a power generation amount of a renewable energy power supply, or the like. In the present approach, the result value includes at least market price (electric power selling price or electric power buying price). In a market in the continuous trading session method such as the intraday trading market, average price of market price in a trading period (bid unit time frame), or a representative value such as a maximum value is set as the market price.

The market data acquirer 11 stores the acquired result data in the case data storage 12. The market data acquirer 11 may transmit a request for acquiring result data at fixed intervals and may acquire result data which has not been acquired yet. Alternatively, the market data acquirer 11 may designate an acquisition target period and may acquire result data belonging to the designated acquisition target period from the electric power trading market system. Alternatively, the result data may be acquired through push notification from the electric power trading market system. The result data may be acquired from the electric power trading market system using a method other than the methods described here.

The calendar information storage 14 stores calendar information including each date and attribute information. Examples of the attribute information can include segment information for distinguishing whether each date is a weekday or a holiday. Further, examples of the attribute information can include day information indicating a day of each date. Still further, examples of the attribute information can include holiday event information indicating name of a holiday. Examples of the attribute information can include segment information of hours such as daytime, midnight and commuting time. Further, examples of the attribute information can include information of season (summer, winter). Still further, examples of the attribute information can include event information such as a big sports event and a festival.

The calendar information setting device 13 reads out calendar information corresponding to date and time of the result data stored in the case data storage 12 from the calendar information storage 14 and sets the calendar information at the case data storage 12.

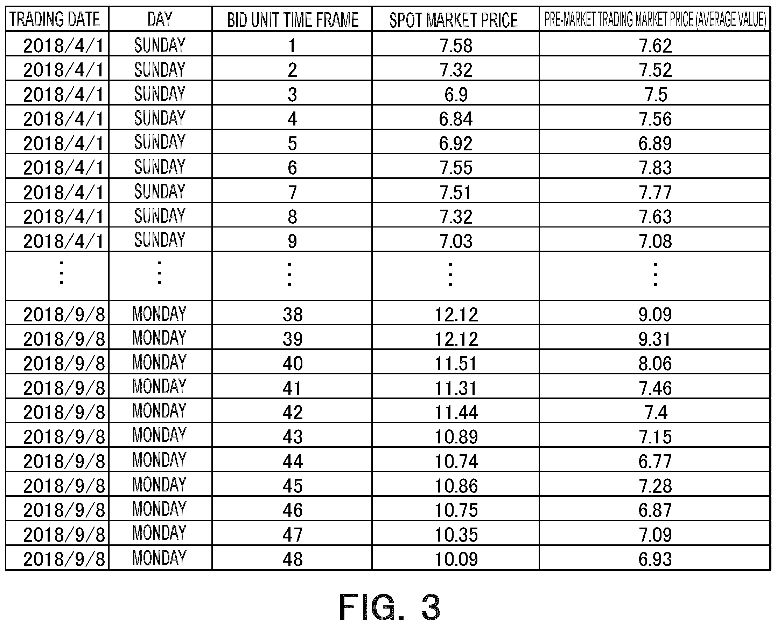

FIG. 3 illustrates an example of case data stored in the case data storage 12 in a tabular format. The case data includes the result data and the calendar information, and the result data is associated with the calendar information via date and time. Specifically, the case data includes trading date, day, a bid unit time frame, spot trading price, and intraday trading price (in the present example, an average value). The bid unit time frame is set for each of 30 minutes, and ID numbers of the bid unit time frames are set in a column of the bid unit time frame.

For example, a bid unit time frame 2 corresponds to a trading period of 30 minutes from 0:30 to 1:00. A set of the trading date and the bid unit time frame indicates trading date and time. For example, the bid unit time frame 2 of trading date of April 1, 2018 corresponds to trading date and time of 0:30 to 1:00 on April 1, 2018.

The spot trading price and the intraday trading price are trading price of electric power traded in respective markets in the corresponding trading period. The spot trading price and the intraday trading price are respectively unit price of electric power per 1 kWh. While, in the present example, there are two types of electric power trading markets, there may be three or more types of electric power trading markets. Also in this case, the case data only requires to include information of market price in the respective electric power trading markets corresponding to the same bid unit time frame.

The similarity score calculator (similarity calculator) 16 calculates a similarity score indicating similarity between a bid unit time frame which becomes a trading target, and a past bid unit time frame stored in the case data storage 12. While there are a case where the similarity score becomes greater as the similarity is higher and a case where the similarity score becomes smaller as the similarity is higher depending on definition of the similarity score, both cases are possible. In the present approach, it is assumed that the similarity score becomes greater as the similarity is higher. The bid unit time frame which becomes a trading target is a bid unit time frame on future date and time (for example, tomorrow). The similarity score calculator 16 sets the calculated similarity score at the case data. An example of a calculation method of the similarity score will be described below.

As an example, a positive predetermined value (such as, for example, 1.0 and 0.1) is set as the similarity score for the bid unit time frame which is the same as the bid unit time frame which becomes a trading target and which belongs to the past date within fixed days from the bid unit time frame which becomes the trading target. 0.0 is set for other bid unit time frames.

As another example, there is a method in which the similarity score is set lower in accordance with the number of days dated back from target date. Further, there is also a method in which the similarity score is changed on the basis of whether or not an attribute such as a day, a holiday and a weekday is the same.

The similar case data extractor 15 extracts a plurality of pieces of case data whose similarity scores are equal to or higher than a threshold from the case data storage 12 as similar case data, and stores the extracted similar case data in the similar case data storage 17. Alternatively, the similar case data extractor 15 extracts all pieces of case data for which the similarity scores are calculated as the similar case data, and stores the similar case data in the similar case data storage 17. The extracted case data may be sorted in descending order or in ascending order of the similarity score, and case data of the top predetermined number of pieces may be extracted. The similarity scores may be normalized so that a sum of the similarity scores of the similar case data becomes 1. The similar case data extractor 15 may acquire a threshold, the number of pieces of case data to be extracted, or the like, from the input device 22 as a parameter. The parameter may be input by the user from the input device 22.

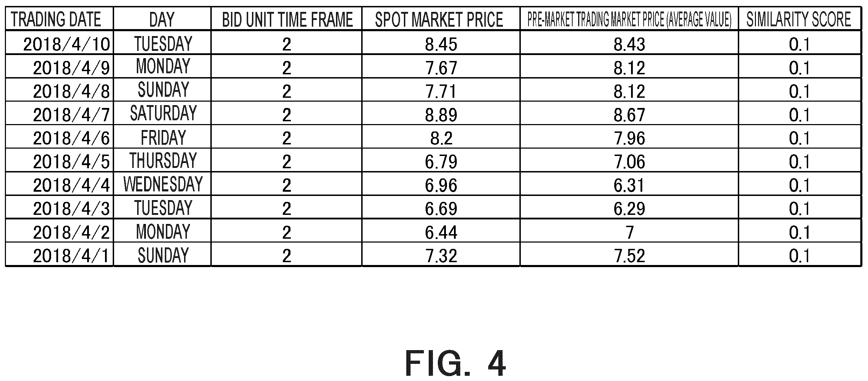

FIG. 4 illustrates an example of the similar case data extracted by the similar case data extractor 15. The bid unit time frame which becomes a trading target is set at the second frame (0:30 to 1:00) of April 11, 2018, Wednesday. The similarity score is calculated as 0.1 for case data of the same bid unit time frames in the past 10 days among the case data in FIG. 3. The similarity is set at 0 for data 11 or more days before, and case data whose similarity score is 0 is not extracted because the similarity score is less than the threshold.

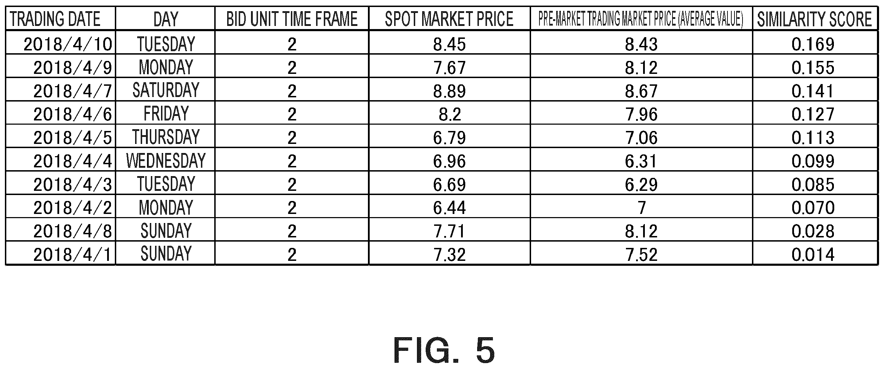

FIG. 5 illustrates an example where the similarity score is calculated using a method in which the similarity score is set lower in accordance with the number of days dated back from the target date, and the similarity score is set higher in a case where an attribute of the day (in the present example, whether a weekday or a holiday) is the same. 10 pieces of case data are extracted in descending order of the similarity score. Because the target date is April 11, which is a weekday, similarity scores of the bid unit time frames in weekdays are calculated as high. In FIG. 5, the case data is sorted in descending order of the similarity score. The similarity scores are normalized so that a sum of the similarity scores of the case data becomes 1.

The bid quantity proportion determiner 18 tentatively sets electric power energy to be traded (bid) in a plurality of electric power trading markets. The tentatively set electric power energy will be referred to as tentative electric power energy. The plurality of electric power trading markets include a spot trading market and a intraday trading market in the present example. A sum of electric power energy (trading volumes) to be bid for spot trading price and intraday trading price is determined in advance, and the electric power energy to be bid for the respective electric power trading markets are tentatively set on the basis of the sum of the electric power energy. It is also possible to tentatively set proportions of the electric power energy to be bid for the spot trading price and the intraday trading price instead of tentatively setting the electric power energy. In the present example, a case will be assumed where a sum of the electric power energy to be bid for the spot trading price and the intraday trading price are determined in advance, and proportions of the electric power energy to be bid for the spot trading price and the intraday trading price are tentatively set. The proportions of the electric power energy to be bid for the plurality of electric power trading markets will be referred to as bid quantity proportions (trading volume proportions).

As an example of a method for tentatively setting the bid quantity proportions, there is a method, so-called grid search, in which 1.0 is equally divided, and all combinations of bid quantity proportions are exhaustively searched for so that a sum of the bid quantity proportions of the respective markets becomes 1. For example, it is assumed that there are three types of electric power trading markets, and bid quantity proportions of the respective markets are expressed as (a proportion of a market 1, a proportion of a market 2, a proportion of a market 3). If the bid quantity is divided into tenths, a total of $10^3$ combinations of proportions are searched for.

(1.0, 0.0, 0.0) -> (0.9, 0.1, 0.0) -> (0.9, 0.0, 0.1) $\rightarrow$ (0.8, 0.2, 0.0) $\rightarrow$ (0.8, 0.1, 0.1) $\rightarrow$ (0.8, 0.0, 0.2) $\rightarrow$ ... $\rightarrow$ (0.0, 0.1, 0.9) $\rightarrow$ (0.0, 0.0, 1.0)

As a method for searching for combinations of proportions, there are a hill climbing method, a simulated annealing method, genetic algorithm, particle swarm optimization (PSO), or the like, in addition to the above. For example, the hill climbing method is a method in which a step of randomly changing proportions of the respective markets set in the previous loop by a slight quantity, and, in a case where an index (such as a risk return index which will be described later) is improved, employing the changed proportions, otherwise, returning the proportions to the proportions before change is repeated. The simulated annealing method is a method in which the changed proportions are stochastically employed even in a case where the risk return index is not improved. In the present approach, the method for searching for the proportions is not particularly limited.

The relationship calculator 21 calculates relationship between an evaluated value based on a sum of trading amounts in a case where respective tentative trading volumes are traded in the plurality of trading markets, and a frequency of the evaluated value. Specifically, the relationship calculator 21 calculates a sum of trading amounts in a case where a deal (electric power selling or electric power buying) of electric power is done at the tentatively set bid quantity proportions at result values (result price) of respective pieces of similar case data, and calculates the evaluated value on the basis of the calculated sum of trading amounts.

Further, the similarity scores of the respective pieces of similar case data are set as frequencies. Relationship data in which the frequencies of the respective pieces of similar case data are associated with the evaluated values corresponding to the respective pieces of similar case data is generated. In the present example, probability distribution (pseudo probability distribution) in which the evaluated values are associated with probabilities is generated while the similarity scores are regarded as occurrence probabilities (occurrence frequencies). The pseudo probability distribution is calculated for each of a plurality of bid quantity proportions.

The evaluated value is a sum of the calculated trading amounts itself as an example. In a case of electric power selling, the sum of trading amounts corresponds to selling price of electric power selling. In a case of electric power buying, the sum of trading amounts corresponds to buying price of electric power buying. Further, the evaluated value may be earnings obtained by subtracting cost for procuring electric power from the sum of trading amounts in a case of electric power selling. In the following description, it is assumed to sell electric power, and earnings are dealt with as the evaluated value. Therefore, as the relationship data, pseudo probability distribution in which the earnings are associated with the probabilities is created. However, the selling price or the buying price may be dealt with in place of the earnings. In this case, it is only necessary to create pseudo probability distribution in which the selling price is associated with the probabilities or pseudo probability distribution in which the buying price is associated with the probabilities.

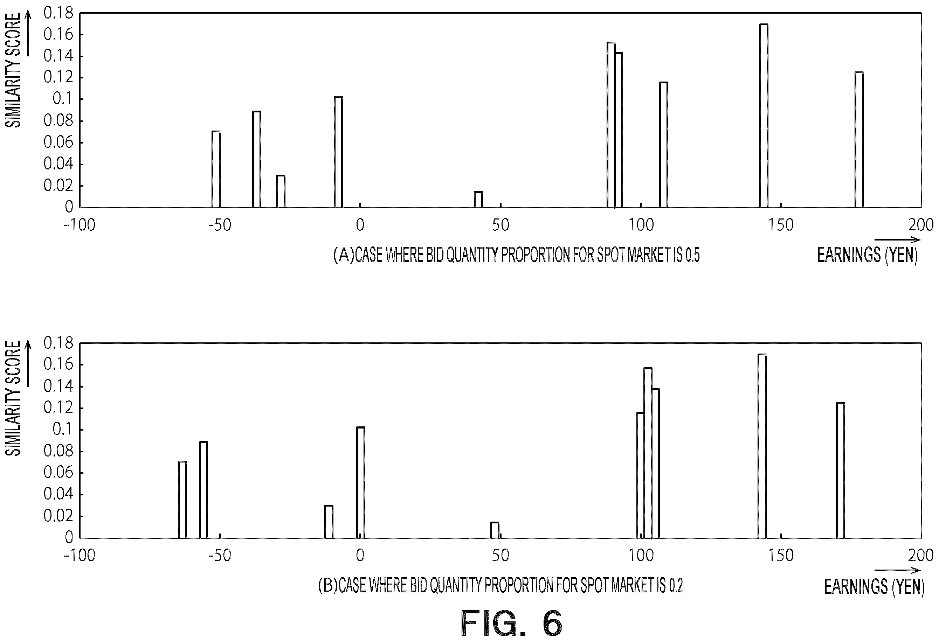

FIG. 6(A) illustrates an example of pseudo probability distribution of earnings in a case where the bid quantity proportion for the spot trading market is set as 0.5, and the bid quantity proportion for the intraday trading market is set as 0.5 in a case where a total electric power energy of 100 kWh is sold, using the similar case data in FIG. 5. It is assumed that procurement cost of a total electric power energy of 100 kWh is 7 yen/kWh. A horizontal axis indicates earnings calculated from market price (trading price) of similar case data in each trading market. A vertical axis indicates a similarity score of the similar case data.

FIG. 6(B) illustrates an example of pseudo probability distribution of earnings in a case where the bid quantity proportion for the spot trading market is 0.2, and the bid quantity proportion for the intraday trading market is 0.8. A horizontal axis indicates earnings calculated from market price (trading price) of similar case data in each trading market. A vertical axis indicates a similarity score of the similar case data.

The index calculator 20 calculates at least one index (which will be called a risk return index) by utilizing the pseudo probability distribution corresponding to each bid quantity proportion. An example of the risk return index will be described below.

As a first example of the risk return index, a weighted average value weighted with similarity scores of earnings obtained from the respective pieces of similar case data is calculated as an expected value of earnings. A calculation expression will be indicated as Expression 1.

[Expression 1]

$$\frac{1}{M} \sum_{m=1}^{M} \sum_{n=1}^{N} W_m \left( P_{n,m} \times R_n \right)$$

"M" indicates the number of pieces of similar case data, "N" indicates the number of electric power trading markets, "Pn,m" indicates a result value (result price) of similar case data "m" in a market "n", "Rn" indicates a bid quantity proportion for the market "n", and "Wm" indicates a similarity score of the similar case data "m". As mentioned above, the similarity score "Wm" is normalized so that a sum of the similarity scores of all pieces of similar case data becomes 1. "Wm" is also a weight coefficient corresponding to a frequency of the result value.

As a second example of the risk return index, a sum of similarity scores is sequentially calculated from case data for which earnings are low in the pseudo probability distribution. A similar case data group in which a sum of similarity scores matches lower percentile which becomes a reference value (first reference value) or less than the lower percentile (or equal to or greater than the lower percentile) and becomes the closest to the lower percentile, is specified, and earnings of the similar case data (earnings of the lower percentile) for which earnings become the highest in the similar case data group is calculated as a risk return index.

For example, in the pseudo probability distribution in FIG. 6(A), in a case of 10 percentile, earnings of the similar case data at the second from the bottom become the risk return index in the second example. In a case of 30 percentile, earnings of the similar case data at the fourth from the bottom become the risk return index in the second example.

As a third example of the risk return index, a similar case data group for which earnings fall within a range from the bottom to the lower percentile (or short of the lower percentile) is specified as in the following Expression 2 using the lower percentile which becomes a reference value (second reference value), and an average (lower percentile expected value) of earnings of the similar case data group is set as the risk return index.

[Expression 2]

$$\frac{1}{\sum\limits_{m=1}^{T} W_m} \sum\limits_{m=1}^{T} \sum\limits_{n=1}^{N} W_m \left( P_{n,m} \times R_n \right)$$

In Expression 2, it is assumed that similar case data "m" is sorted in ascending order of earnings. "T" indicates the number of pieces of similar case data which falls within the lower percentile. Meaning of other symbols is the same as that in Expression 1.

For example, in the pseudo probability distribution in FIG. 6(A), in a case of 30 percentile, it is only necessary to perform weighted averaging on earnings of the similar case data up to the fourth (or up to the third) from the bottom of the earnings with the similarity scores.

As a fourth example of the risk return index, in the pseudo probability distribution, a sum of the similarity scores is sequentially calculated from case data for which earnings are higher. A similar case data group in which a sum of similarity scores matches upper percentile which becomes a reference value (third reference value) or is equal to or greater than the upper percentile (or less than the upper percentile) and becomes the closest to the upper percentile, is specified, and earnings of the similar case data (earnings of the upper percentile) for which earnings become the lowest in the similar case data group are set as the risk return index.

As a fifth example of the risk return index, in the pseudo probability distribution, a similar case data group for which earnings fall within a range from the top to upper percentile (or short of the upper percentile) which becomes a reference value (fourth reference value) is specified, and an average (upper percentile expected value) of earnings of the similar case data group is set as the risk return index. A calculation expression of the index in the fifth example is similar to that in Expression 2. However, it is assumed that the similar case data "m" is sorted in descending order of earnings. "T" indicates the number of pieces of similar case data which falls within the upper percentile.

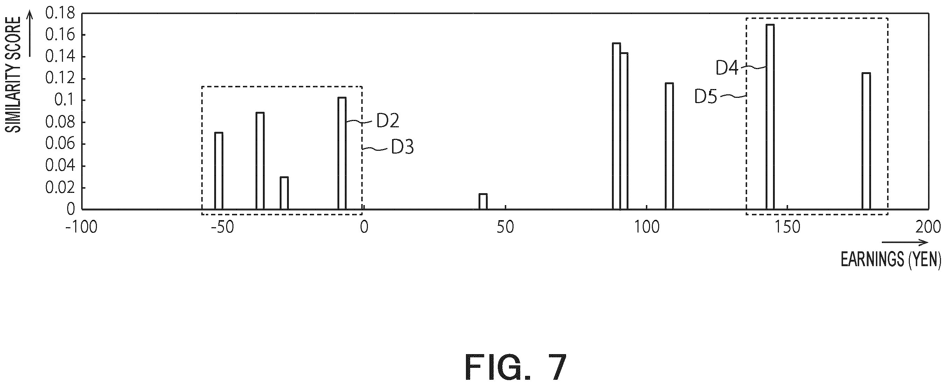

FIG. 7 illustrates an example where, in the pseudo probability distribution in FIG. 6(A), similar case data which becomes a target in a case where the risk return indexes in the second example to the fifth example are calculated is specified. In more detail, in a left part of FIG. 7, similar case data D2 for which an index for lower 30 percentile earnings (risk return index in the second example) is to be calculated is illustrated. Further, in a case of lower 30 percentile, similar case data D3 for which an index for the lower 30 percentile expected value (risk return index in the third example) is to be calculated is illustrated. In a right part of FIG. 7, similar case data D4 for which an index for upper 30 percentile earnings (risk return index in the fourth example) is to be calculated is illustrated. Further, similar case data D5 for which an index for upper 30 percentile expected value (risk return index in the fifth example) is to be calculated is illustrated.

The strategy determiner 19 determines trading strategy for determining the risk return index to be used at the index calculator 20. The trading strategy is associated with the risk return index on a one-to-one basis as an example. The strategy determiner 19 may acquire information which designates trading strategy from the input device 22 and may determine trading strategy indicated in the acquired information. Alternatively, the strategy determiner 19 may specify trend of market price in the past time frame which is the same time frame as the target bid unit time frame and may determine trading strategy in accordance with the trend.

For example, the trend includes whether moving average deviations of most recent market price in a typical market (for example, in a case of the JEPX, a spot trading market) increase (upward trend) or decrease (downward trend), or are virtually unchanged (flat or trendless), or the like. Alternatively, the trend includes whether moving average deviations of a sum of market price of a plurality of target trading markets (in a case of the example in FIG. 3, the spot trading market and the intraday trading market) increase (upward trend), decrease (downward trend), or are virtually unchanged (flat or trendless), or the like. In a case where the market price is upward trend, risk-taking strategy is selected, in a case where the market price is downward trend, risk-off strategy is selected, and, in a case where the market price is stable, standard strategy is selected.

The index calculator 20 determines the risk return index in accordance with the trading strategy determined at the strategy determiner 19, and calculates the determined risk return index.

For example, in a case where the trading strategy determined at the strategy determiner 19 is the standard strategy, the risk return index in the first example (weighted average value weighted with the similarity scores) is used. In a case where the trading strategy is the risk-taking strategy, the risk return index in the fourth example (upper percentile earnings) or the risk return index in the fifth example (upper percentile expected value) is used. In a case where the trading strategy is the risk-off strategy, the risk return index in the second example (the lower percentile earnings) or the risk return index in the third example (the lower percentile expected value) is used.

Note that other types of the trading strategy can be selected, other types of the risk return index may be used, and the types are not particularly limited in the present approach. For example, it is also possible to set a plurality of values such as 30, 40 and 50 as the upper percentile and make the values selectable as respectively different types of trading strategy. In a similar manner, it is also possible to set a plurality of values as the lower percentile and make the values selectable as respectively different types of trading strategy.

The bid quantity proportion determiner 18 specifies the bid quantity proportions from which the highest risk return index or the risk return index equal to or higher than a threshold can be obtained on the basis of the risk return indexes calculated at the index calculator 20 for respectively tentatively set bid quantity proportions. For example, it is also possible to calculate the risk return indexes for all combinations of the bid quantity proportions through grid search in a previous term at the index calculator 20, and specify the bid quantity proportions for which the risk return index is the highest. Alternatively, a step of changing the bid quantity proportions in search algorithm in a previous term and calculating the risk return index is repeated, and if the number of times of repetition or a time limit set in advance is reached, the processing is finished. Then, the bid quantity proportions for which the highest risk return index is calculated at the end of the processing may be specified. Alternatively, it is also possible to finish the processing if the risk return index to be calculated is not improved, or a degree of improvement becomes low, and specify the bid quantity proportions for which the highest risk return index is calculated at the end of the processing.

The bid quantity proportion determiner 18 provides information such as the specified bid quantity proportions, pseudo probability distribution corresponding to the specified bid quantity proportions, and the risk return index of the specified bid quantity proportions to the output device 23. The output device 23 outputs the provided information. The output information is confirmed by the user.

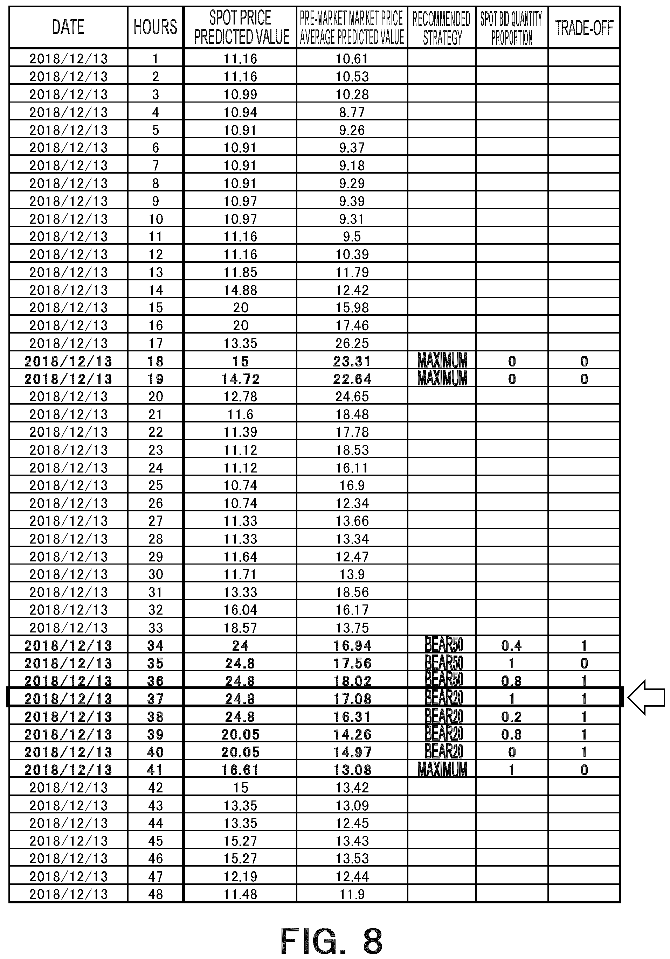

FIG. 8 to FIG. 10 illustrate an example of a user interface at which the trading strategy determined at the strategy determiner 19, the calculated risk return index, and the bid quantity proportions in the respective electric power trading markets are output.

In FIG. 8, values of respective items are set for the bid unit time frames (ID: 18, 19, 34 to 41) designated by the user among the hours (bid unit time frames) of the next day on a screen in a tabular format. The respective items include the trading strategy (recommended strategy) determined at the strategy determiner 19, the determined bid quantity proportions of the respective electric power trading markets, and whether or not trade-off occurs between the risk return indexes (which will be described later).

Here, "maximum", "bear 20", "bear 50", or the like, indicate name of the selected trading strategy. For example, "maximum" indicates the risk return index (weighted average value weighted with the similarity scores) in the first example. "Bear 20" indicates an index of earnings of lower percent 20 as the risk return index in the second example. "Bear 50" indicates an index of earnings of lower percent 50 in the risk return index in the second example. Name of the risk return index may be displayed in place of the recommended strategy. The spot bid quantity proportion indicates a proportion of the electric amount to be bid for the spot trading market. For example, 0.4 means that the proportion of the bid quantity for the spot trading market is 0.4, and the proportion of the bid quantity for the intraday trading market is 0.6.

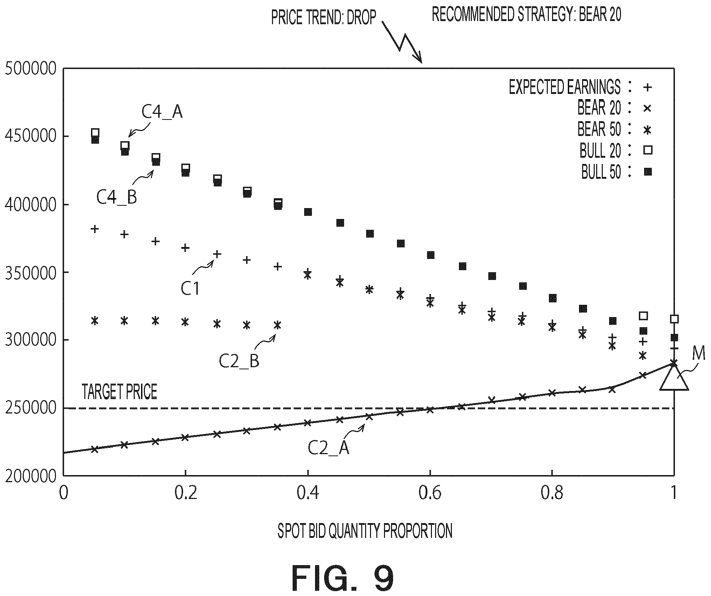

FIG. 9 illustrates respective risk return indexes which are visualized and displayed in a case where the proportion of the bid quantity for the spot trading market is changed between 0 and 1 for the bid unit time frame (see an arrow in FIG. 8) selected on the screen in FIG. 8. A vertical axis indicates earnings. Graphs indicating change of the respective risk return indexes are displayed in an overlapped manner. A graph C1 of the risk return index in the first example corresponding to the trading strategy (expected earnings), a graph C2_A of the second risk return index (earnings of lower percentile 20) corresponding to the trading strategy (bear 20), a graph C2_B of the second risk return index (earnings of lower percentile 50) corresponding to the trading strategy (bear 50), a graph C4_A of the fourth risk return index (earnings of upper percentile 20) corresponding to the trading strategy (bull 20), and a graph C4_B of the fourth risk return index (earnings of upper percentile 50) corresponding to the trading strategy (bull 50) are indicated.

In the present example, a case where bear 20 is used as the trading strategy (see a thick solid line), and a spot selling proportion at which the earnings become the highest is determined is indicated (see mark M). Target price is set by the user in advance. The user can utilize information in FIG. 9 as reference information for considering appropriateness of the trading strategy. The user may determine whether to employ this bid quantity proportion in accordance with whether or not the price exceeds the target price. Further, the user may adjust the bid quantity proportions for the respective electric power trading markets.

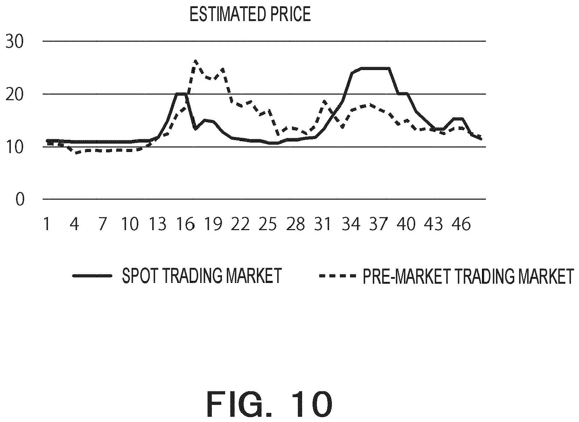

FIG. 10 is a graph indicating transition of a predicted value of the spot market price in the table in FIG. 8 and transition of a predicted value of an average of intraday trading price. The predicted value of the spot market price and the predicted value of the average of the intraday trading price are values calculated by performing weighted averaging (with similarity scores) on result price of respective similar case samples for each bid unit time frame. Note that any calculation method may be used as a calculation method of the predicted value of the spot market price and the predicted value of the average of the intraday trading price, and the method is not particularly limited to the present method.

An example of the user interface is not limited to FIG. 8 to FIG. 10. For example, there can be a case where pseudo probability distribution of earnings as illustrated in FIG. 6 described above is displayed in accordance with the bid quantity proportions selected by the user. It is only necessary that the user interface display information which assists the user to confirm or change content determined by the present approach.

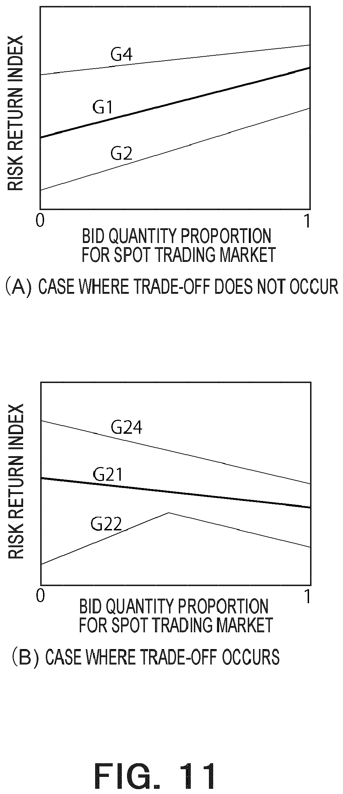

Trade-off between the risk return indexes will be described using FIG. 11.

FIG. 11 illustrates three types of risk return indexes which are visualized and displayed, in a case where the proportion for the spot trading market is changed between 0 and 1 for a bid unit time frame, in a similar manner to FIG. 9.

FIG. 11(A) illustrates an example in a case where trade-off does not occur. A graph G1 of the risk return index in the first example (weighted average value weighted with similarity scores), and a graph G2 of the risk return index in the second example (lower percentile earnings) in a case where the risk-off strategy is selected, are displayed. Further, a graph G4 of the risk return index in the fourth example (upper percentile earnings) in a case where the risk-taking strategy is selected, is indicated. The bid quantity proportion for the spot trading market for which the risk return index becomes a maximum is the same among these three risk return indexes. Therefore, in this case, trade-off relationship does not occur between a risk and a return.

In an example in FIG. 11(A), because spot proportions (bid quantity proportions) at which the three types of risk return indexes become maximum values are the same, it can be judged that the same bid quantity proportion is optimal in terms of any risk return index.

FIG. 11(B) illustrates an example in a case where trade-off occurs. A graph G21 of the risk return index in the first example (weighted average value weighted with similarity scores), a graph G22 of the risk return index in the second example (lower percentile earnings), and a graph G24 of the risk return index in the fourth example (upper percentile earnings) are indicated. The bid quantity proportions for the spot trading market at which these three risk return indexes become maximums are not the same. Therefore, in this case, trade-off relationship occurs between a risk and a return.

In an example in FIG. 11(B), the spot proportion (bid quantity proportion) at which the lower percentile index of the graph G22 becomes a maximum value does not match a proportion at which the upper percentile index of the graph G24 becomes a maximum value. Therefore, the spot proportion (bid quantity proportion) to be recommended differs in accordance with the trading strategy to be selected.

In this manner, in a case where the bid quantity proportions at which a plurality of types of risk return indexes become maximums (or minimums) are not the same, the bid quantity proportion determiner 18 regards the case as trade-off relationship occurring between a risk and a return. The bid quantity proportion determiner 18 outputs information indicating that the bid quantity proportions which are optimal among the plurality of types of risk return indexes are not the same (information indicating that trade-off occurs) to the output device 23. The user can judge whether or not to employ the selected trading strategy as is on the basis of the displayed information.

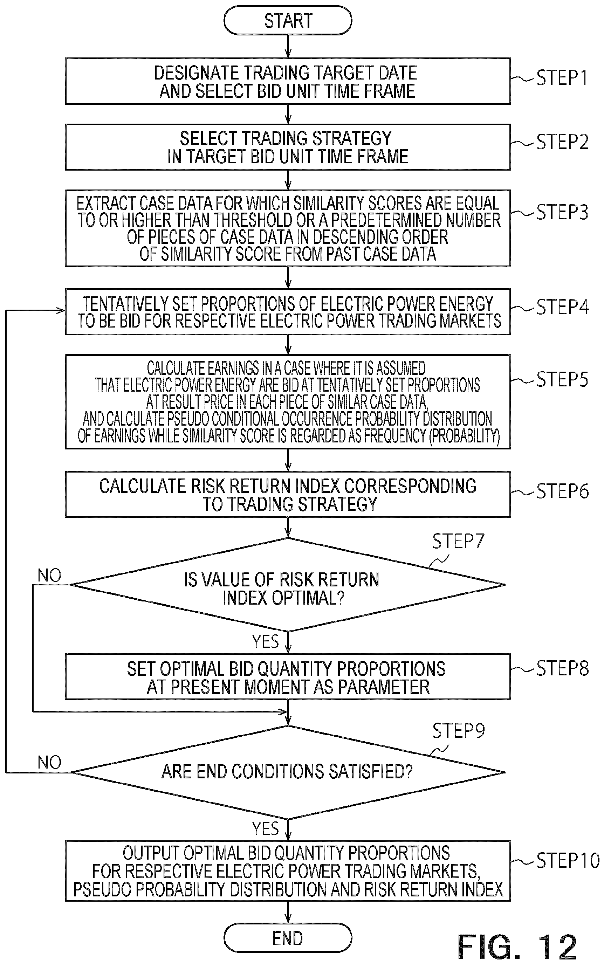

FIG. 12 is a flowchart illustrating an example of operation of the information processing apparatus according to the present approach.

First, target trading date and hours (bid unit time frame) are determined (STEP 1). The target trading date and the hours may be determined on the basis of information input from the user or may be determined using other methods determined in advance.

The strategy determiner 19 determines trend of the market price on the basis of the past case data accumulated in the case data storage 12. The strategy determiner 19 determines trading strategy to be applied to the selected bid unit time frame among a plurality of types of trading strategy prepared in advance (STEP 2). Alternatively, the user inputs information which designates the trading strategy from the input device 22, and the strategy determiner 19 determines the trading strategy on the basis of the information input by the user (STEP 2). The trend of the market price (spot trading price, intraday trading price or an average of the both, or the like) may be determined on the basis of the similar case data accumulated in the similar case data storage 17.

The similar case data extractor 15 obtains a similarity score between data of the bid unit time frame which becomes a trading target at the present moment and the past case data in the corresponding bid unit time frame in the case data storage 12 using the similarity score calculator 16. As the similar case data, case data whose similarity scores are equal to or higher than a threshold is extracted or a predetermined number of pieces of case data are extracted in descending order of the similarity score (STEP 3).

Then, processing from STEP 4 to STEP 9 is repeated. The bid quantity proportion determiner 18 tentatively sets proportions (bid quantity proportions) of electric power energy to be bid for respective electric power trading markets (STEP 4). Earnings in a case where electric power selling (electric power is procured in advance) is bid for at the tentatively set bid quantity proportions or electric power buying is bid for at the bid quantity proportions at result price of the respective pieces of similar case data by the relationship calculator 21, and a deal of the electric power selling or the electric power buying is done are calculated using the relationship calculator 21. Then, pseudo probability distribution is calculated while the similarity scores are regarded as occurrence probability, on the basis of information of earnings corresponding to the respective pieces of market trading case data and the respective similarity scores (STEP 5).

The pseudo probability distribution is an example of data indicating relationship between a trading volume and a frequency of the trading volume. The trading volume corresponds to a total selling price in a case of electric power selling, and corresponds to a total buying price in a case of electric power buying. Earnings obtained by subtracting procurement cost of electric power from the trading volume may be used in place of the trading volume. In the present example, it is assumed that the earnings are used (STEP 5).

The index calculator 20 selects a risk return index corresponding to the trading strategy determined at the strategy determiner 19 and calculates the selected risk return index on the basis of the pseudo probability distribution (STEP 6).

If the calculated risk return index is a value greater than a parameter (optimal value at the present moment) at which an initial value is set (or which is updated) (STEP 7: Yes), the bid quantity proportions for the respective electric power trading markets which are tentatively set in STEP 4 are set as the parameter (the parameter is updated) (STEP 8). If the risk return index is less than the parameter, the parameter is not updated. It is judged whether end conditions set in advance are satisfied, and in a case where the end conditions are satisfied (STEP 9: Yes), the bid quantity proportions (most optimal bid quantity proportions) indicated by the parameter, the pseudo probability distribution and the risk return index are output to the output device 23. Processing for the bid unit time frame selected in STEP 1 is finished (STEP 10). For example, in a case of grid search, if all combinations of the bid quantity proportions for the respective electric power trading markets are searched for, the end conditions are satisfied. In addition, it is also possible to make settings such that the end conditions are satisfied in a case where the number of times of repetition or limit time set in advance is reached, or in a case where a degree of improvement of the risk return index becomes low. In a case where the end conditions are not satisfied (STEP 9: No), the processing returns to STEP 4, and the processing continues.

As described above, according to the present approach, because the bid quantity proportions for a plurality of trading markets are determined using the risk return index in accordance with the trading strategy, the user can obtain a desired trading result with high accuracy. By this means, it is possible to effectively assist the user to trade in a plurality of trading markets.

(Second approach)

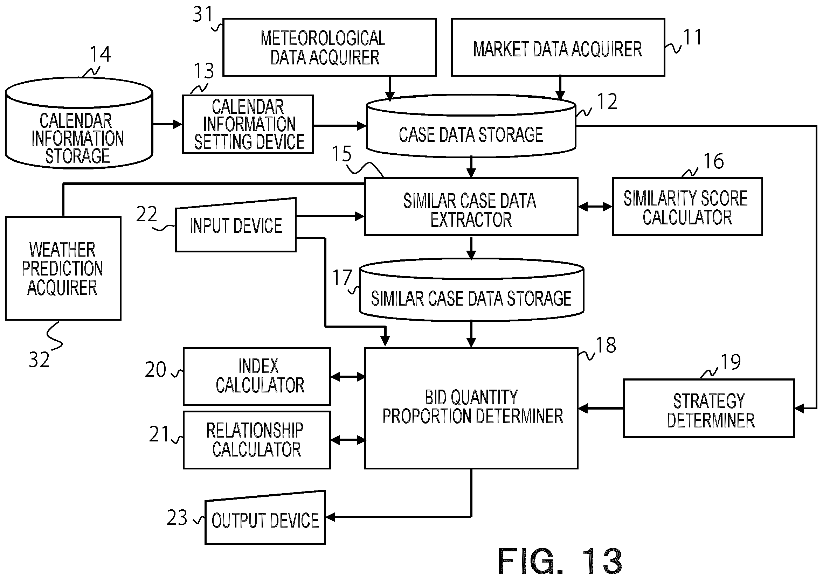

FIG. 13 is a block diagram of a trading support apparatus which is an information processing apparatus according to a second approach. In the present approach, a meteorological data acquirer 31 and a weather prediction acquirer 32 are added to the trading support apparatus in the first approach. The second approach is characterized in that a similarity score is calculated by utilizing a weather predicted value of date and time corresponding to the bid unit time frame which becomes a trading target.

The meteorological data acquirer 31 acquires a result value of the weather information (meteorological value) from an external system. Note that, in a case where the result value of the meteorological value cannot be acquired, an immediately preceding predicted value by a meteorological data predictor may be used in place of the result value.

The weather prediction acquirer 32 acquires a meteorological value at a representative point of an area to which the electric power trading market belongs. The weather prediction acquirer 32 acquires the predicted value of the meteorological value from the external system of the present apparatus, for example, a meteorological server, web service, or cloud service provided by domestic and foreign governmental institutions such as Meteorological Agency, a private enterprise, and an international institution. Further, the weather prediction acquirer 32 may predict the meteorological value using a numerical value prediction model corresponding to the above-described area. The numerical value prediction model is, for example, a global ensemble trading support apparatus, a global model, a meso-scale model, a local model, or the like.

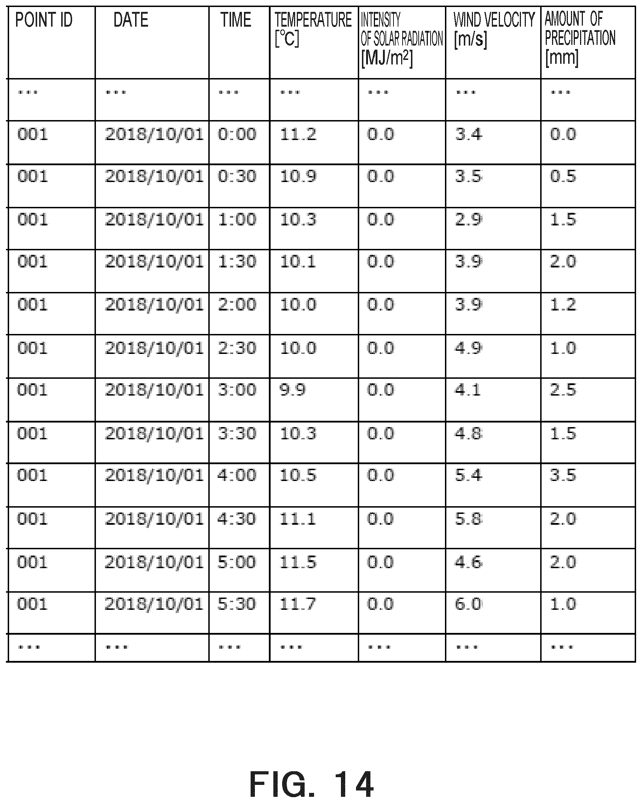

FIG. 14 illustrates a data example of the result value of the meteorological value acquired by the meteorological data acquirer 31. A point ID, date, time, and a weather result value are stored. In this example, result values from 0:00 to 5:30 on October 1, 2018 are indicated for a point whose point ID is 001. While a time interval is 30 minutes, the time interval may be other intervals such as 10 minutes, and one hour. While, in this example, the meteorological value is a temperature, intensity of solar radiation, wind velocity, and precipitation, the meteorological value is not limited to these. The point 001 corresponds to a representative point in an area to which the electric power trading market belongs as an example. Data of the predicted value of the meteorological value to be acquired by the weather prediction acquirer 32 also has a format similar to that in FIG. 14.

The case data storage 12 merges result data of a plurality of electric power trading markets, calendar information, and the data acquired by the meteorological data acquirer 31 using date and time as a key.

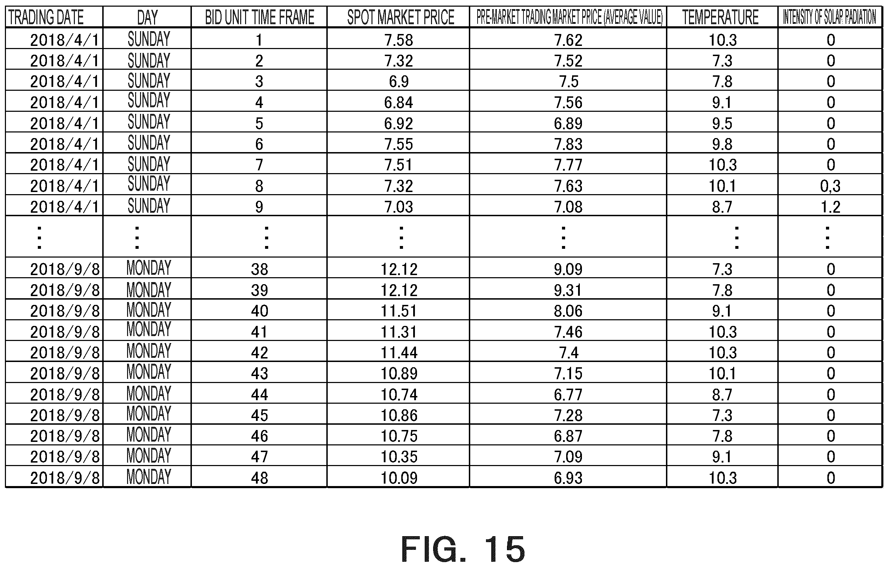

FIG. 15 illustrates an example of the merged data. Compared to FIG. 3 in the first approach, the result values of the meteorological values (a temperature and intensity of solar radiation) are added.

The similarity score calculator 16 calculates a Euclidean distance between a vector (coordinate) including a predicted value of each meteorological value corresponding to a bid unit time frame and a vector (coordinate) including a result value of the meteorological value of each piece of case data for the date and time (bid unit time frame) which is a prediction target. The vector (coordinate) indicates a coordinate in feature amount space having, for example, meteorological values (a temperature, intensity of solar radiation, precipitation, or the like) which may affect electric power trading price, as components.

The similarity score calculator 16 calculates a smaller similarity score for case data for which a Euclidean distance between the vector of the predicted value of each meteorological value and a vector of the result value of each piece of case data is larger. An example of a calculation expression of the similarity score is indicated in the following Expression 3. "m" indicates case data, "Vm" indicates a Euclidean distance, and "Wm" indicates a similarity score. "Wm" is also a weight coefficient corresponding to a frequency of a result value.

$$[\text{Expression 3}]$$

$$Wm = 1 / (V_m \times \Sigma (1/ V_k))$$

The similar case data extractor 15 extracts case data for which the similarity score calculated by the similarity score calculator 16 is equal to or higher than a threshold or a predetermined number of pieces of case data in descending order of the similarity score, from the past case data as similar case data in a similar manner to the first approach.

Because configurations and operation of other blocks are similar to those in the first approach, description will be omitted.

As described above, according to the second approach, by calculating the similarity score using the meteorological value, it is possible to extract case data in the past which is more similar to date and time which is a trading target. By this means, it is possible to determine the bid quantity proportions for respective electric power trading markets with high reliability.

(Hardware Configuration)

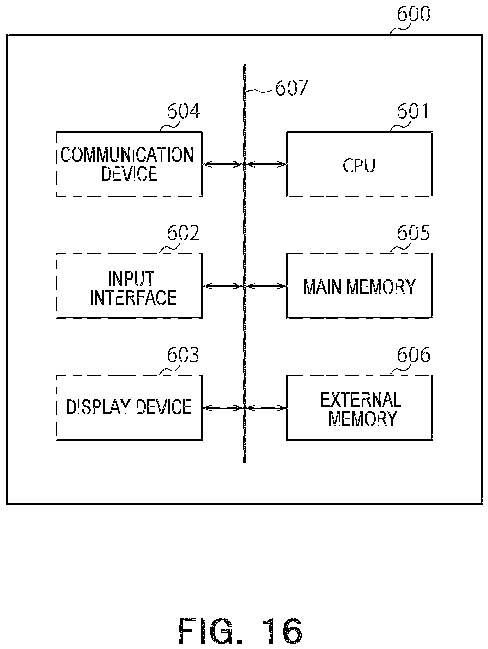

FIG. 16 illustrates a hardware configuration of the information processing apparatus of FIG. 1 or FIG. 13 in the present approach. The information processing apparatus of FIG. 1 or FIG. 13 is configured with a computer device 600. The computer device 600 includes a CPU601, an input interface 602, a display device 603, a communication device 604, a main storage device 605 and an external storage device 606, which are connected to each other with a bus 607.

The CPU (central processing unit) 101 executes a computer program on the main storage device 605. The program is a program which realizes the above-described respective functional components of the information processing apparatus 101. Each functional component is realized by the CPU601 executing the program. The program does not have to be one program, and may be realized with combination of a plurality of programs or scripts. Each functional component is realized by the CPU 601 executing the program.

The input interface 602 is a circuit for inputting an operation signal from an input device such as a keyboard, a mouse and a touch panel to the information processing apparatus 101. The input unit 22 can be implemented in the input interface 602.

The display device 603 displays data or information output from the information processing apparatus. While the display device 603 is, for example, an LCD (Liquid Crystal Display), an organic electroluminescence display, a CRT (Cathode Ray Tube) or a PDP (Plasma Display Panel), the display device 603 is not limited to these. The data or information output from the computer device 600 can be displayed at this display device 603. The output unit 23 can be implemented in the display device 603.

The communication device 604 is a circuit for the information processing apparatus 101 to perform communication with an external device in a wireless or wired manner. Data can be input from the external device via the communication device 604. Information input from the external device can be stored in the DB.

The main storage device 605 stores the program for realizing processing of the present approach, data necessary for execution of the program, data generated by execution of the program, or the like. The program is expanded on the main storage device 605 and executed. While the main storage device 605 is, for example, a RAM, a DRAM and an SRAM, the main storage device 605 is not limited to these. Each DB and each storage may be constructed on the main storage device 605.

The external storage device 606 stores the program, data necessary for execution of the program, data generated by execution of the program, or the like. These program and data are read out to the main storage device 605 in the processing of the present approach. While the external storage device 606 is, for example, a hard disk, an optical disk, a flash memory, and a magnetic tape, the external storage device 606 is not limited to these. Each DB and each storage may be constructed on the external storage device 606.

Note that the program may be installed in the computer device 600 in advance or may be stored in a storage medium such as a CD-ROM. Further, the program may be uploaded on the Internet.

The computer device 600 may be provided with one or more processors 601, input interfaces 602, display devices 603, communication devices 604 and main memories 605, and peripheral equipment such as a printer and a scanner may be connected to the computer device 600.

Further, the computer device 600 may be configured with a single computer device 600 or may be configured as a system including a plurality of computer devices 600 which are connected to each other.

While certain approaches have been described, these approaches have been presented by way of example only, and are not intended to limit the scope of the inventions. Indeed, the apparatuses described herein may be embodied in a variety of other forms; furthermore various omissions, substitutions and changes in the form of the apparatuses described herein may be made. The accompanying claims and their equivalents are intended to cover such forms or modifications as would fall within the scope of the inventions.

[Clauses]

Clause 1. An information processing apparatus comprising:

an index calculator configured to calculate at least one index depending on tentative trading volumes to be traded in a plurality of trading markets on a basis of trading result data including result values of trading price per unit volume in the plurality of trading markets; and

a determiner configured to determine trading volumes to be traded in the plurality of trading markets on a basis of the index.

Clause 2. The information processing apparatus according to clause 1,
wherein the index calculator calculates the index in accordance with proportions of the tentative trading volumes, and the determiner calculates proportions of the trading volumes to be traded in the plurality of trading markets on a basis of the index.

Clause 3. The information processing apparatus according to clause 1 or 2, further comprising:

a relationship calculator configured to calculate relationship between an evaluated value based on a sum of trading amounts resulting from the tentative trading volumes being traded in the plurality of trading markets; and a weight coefficient corresponding to a frequency of the evaluated value, on a basis of the trading result data, wherein the index calculator calculates the index on a basis of the relationship.

Clause 4. The information processing apparatus according to clause 3,
wherein the trading result data includes the result values at a plurality of trading dates and times in the plurality of trading markets,
the information processing apparatus further comprises a similarity calculator configured to calculate similarity between trading scheduled date and time; and the trading dates and times in the trading result data, and
the relationship calculator calculates the evaluated value on a basis of the result values on the trading dates and times in the plurality of trading markets and
determines the weight coefficient corresponding to the frequency of the evaluated value on a basis of the similarity.

Clause 5. The information processing apparatus according to clause 4,
wherein the relationship calculator calculates the evaluated value using the result values on the trading dates and times for which the similarity is equal to or higher than a threshold or using the result values on a predetermined number of trading dates and times in descending order of the similarity.

Clause 6. The information processing apparatus according to clause 4 or 5,
wherein the trading result data includes a meteorological value on the trading dates and times, and
the similarity calculator calculates the similarity on a basis of a predicted meteorological value on the trading scheduled date and time and meteorological values on the trading dates and times.

Clause 7. The information processing apparatus according to any one of clauses 1 to 6,
wherein the index calculator calculates a first index on a basis of a weighted sum of the evaluated value by the similarity.

Clause 8. The information processing apparatus according to any one of clauses 4 to 7,
wherein the index calculator adds the similarity in ascending order of the evaluated value, and calculates a second index on a basis of a maximum evaluated value in an evaluated value group for which a sum of the similarity matches a first reference value or becomes closest to the first reference value.

Clause 9. The information processing apparatus according to any one of clauses 4 to 8,
wherein the index calculator adds the similarity in ascending order of the evaluated value, specifies an evaluated value group for which a sum of the similarity matches a second reference value or becomes closest to the second reference value, and calculates a third index on a basis of the specified evaluated value group.

Clause 10. The information processing apparatus according to any one of clauses 4 to 9,
wherein the index calculator adds the similarity in descending order of the evaluated value, and calculates a fourth index on a basis of a minimum evaluated value in an evaluated value group for which a sum of the similarity matches a third reference value or becomes closest to the third reference value.

Clause 11. The information processing apparatus according to any one of clauses 4 to 6,
wherein the index calculator adds the similarity in descending order of the evaluated value, specifies an evaluated value group for which a sum of the similarity matches a fourth reference value or becomes closest to the fourth reference value, and calculates a fifth index on a basis of the specified evaluated value group.

Clause 12. The information processing apparatus according to any one of clauses 1 to 11,
wherein the determiner calculates transition of the result value on a basis of the trading result data, and
the determiner determines the index to be used for determination of the trading volumes on a basis of the transition.

Clause 13. The information processing apparatus according to clause 12,
wherein the determiner determines the index to be used for determination of the trading volumes in accordance with whether the transition of the result value is downward trend, upward trend or trendless.

Clause 14. The information processing apparatus according to clause 12, further comprising:

an output device configured to display the transition of the result value; and
an acquirer configured to acquire information designating the at least one index from an input device of a user,
wherein the determiner determines the index to be used for determination of the trading volumes on a basis of the acquired information.

Clause 15. The information processing apparatus according to any one of clauses 1 to 14,
wherein the at least one index includes a plurality of indexes,
the determiner determines the trading volumes in the plurality of trading markets for each of the plurality of indexes, and
outputs information in accordance with whether or not the trading volumes in the plurality of trading markets match.

Clause 16. The information processing apparatus according to any one of clauses 1 to 15,
wherein a trading target in the plurality of trading markets is electric power, and
the trading price is electric power selling price or electric power buying price.

Clause 17. An information processing method comprising:

calculating at least one index depending on tentative trading volumes to be traded in a plurality of trading markets on a basis of trading result data including result values of trading price per unit volume in the plurality of trading markets; and
determining trading volumes to be traded in the plurality of trading markets on a basis of the index.

Clause 18. A computer program which causes a computer to perform processes comprising:

calculating at least one index depending on tentative trading volumes to be traded in a plurality of trading markets on a basis of trading result data including result values of trading price per unit volume in the plurality of trading markets; and

determining trading volumes to be traded in the plurality of trading markets on a basis of the index.

**Claims**

1. An information processing apparatus comprising:

   an index calculator configured to calculate at least one index depending on tentative trading volumes to be traded in a plurality of trading markets on a basis of trading result data including result values of trading price per unit volume in the plurality of trading markets; and
   a determiner configured to determine trading volumes to be traded in the plurality of trading markets on a basis of the index.

2. The information processing apparatus according to claim 1,
   wherein the index calculator calculates the index in accordance with proportions of the tentative trading volumes, and the determiner calculates proportions of the trading volumes to be traded in the plurality of trading markets on a basis of the index.

3. The information processing apparatus according to claim 1 or 2, further comprising:

   a relationship calculator configured to calculate relationship between an evaluated value based on a sum of trading amounts resulting from the tentative trading volumes being traded in the plurality of trading markets; and a weight coefficient corresponding to a frequency of the evaluated value, on a basis of the trading result data, wherein the index calculator calculates the index on a basis of the relationship.

4. The information processing apparatus according to claim 3,
   wherein the trading result data includes the result values at a plurality of trading dates and times in the plurality of trading markets,
   the information processing apparatus further comprises a similarity calculator configured to calculate similarity between trading scheduled date and time; and the trading dates and times in the trading result data, and
   the relationship calculator calculates the evaluated value on a basis of the result values on the trading dates and times in the plurality of trading markets and
   determines the weight coefficient corresponding to the frequency of the evaluated value on a basis of the similarity.

5. The information processing apparatus according to claim 4,
   wherein the relationship calculator calculates the evaluated value using the result values on the trading dates and times for which the similarity is equal to or higher than a threshold or using the result values on a predetermined number of trading dates and times in descending order of the similarity.

6. The information processing apparatus according to claim 4 or 5,
   wherein the trading result data includes a meteorological value on the trading dates and times, and
   the similarity calculator calculates the similarity on a basis of a predicted meteorological value on the trading scheduled date and time and meteorological values on the trading dates and times.

7. The information processing apparatus according to any one of claims 1 to 6,
   wherein the index calculator calculates a first index on a basis of a weighted sum of the evaluated value by the similarity.

8. The information processing apparatus according to any one of claims 4 to 7,
   wherein the index calculator adds the similarity in ascending order of the evaluated value, and calculates a second index on a basis of a maximum evaluated value in an evaluated value group for which a sum of the similarity matches a first reference value or becomes closest to the first reference value.

9. The information processing apparatus according to any one of claims 4 to 8,
   wherein the index calculator adds the similarity in ascending order of the evaluated value, specifies an evaluated value group for which a sum of the similarity matches a second reference value or becomes closest to the second reference value, and calculates a third index on a basis of the specified evaluated value group.

10. The information processing apparatus according to any one of claims 4 to 9,
wherein the index calculator adds the similarity in descending order of the evaluated value, and calculates a fourth index on a basis of a minimum evaluated value in an evaluated value group for which a sum of the similarity matches a third reference value or becomes closest to the third reference value.

11. The information processing apparatus according to any one of claims 4 to 6,
wherein the index calculator adds the similarity in descending order of the evaluated value, specifies an evaluated value group for which a sum of the similarity matches a fourth reference value or becomes closest to the fourth reference value, and calculates a fifth index on a basis of the specified evaluated value group.

12. The information processing apparatus according to any one of claims 1 to 11,
wherein the determiner calculates transition of the result value on a basis of the trading result data, and the determiner determines the index to be used for determination of the trading volumes on a basis of the transition.

13. The information processing apparatus according to claim 12,
wherein the determiner determines the index to be used for determination of the trading volumes in accordance with whether the transition of the result value is downward trend, upward trend or trendless.

14. The information processing apparatus according to claim 12, further comprising:

   an output device configured to display the transition of the result value; and
   an acquirer configured to acquire information designating the at least one index from an input device of a user,
   wherein the determiner determines the index to be used for determination of the trading volumes on a basis of the acquired information.

15. The information processing apparatus according to any one of claims 1 to 14,
wherein the at least one index includes a plurality of indexes,
the determiner determines the trading volumes in the plurality of trading markets for each of the plurality of indexes, and
outputs information in accordance with whether or not the trading volumes in the plurality of trading markets match.

16. The information processing apparatus according to any one of claims 1 to 15,
wherein a trading target in the plurality of trading markets is electric power, and
the trading price is electric power selling price or electric power buying price.

17. An information processing method comprising:

   calculating at least one index depending on tentative trading volumes to be traded in a plurality of trading markets on a basis of trading result data including result values of trading price per unit volume in the plurality of trading markets; and
   determining trading volumes to be traded in the plurality of trading markets on a basis of the index.

18. A computer program which causes a computer to perform processes comprising:

   calculating at least one index depending on tentative trading volumes to be traded in a plurality of trading markets on a basis of trading result data including result values of trading price per unit volume in the plurality of trading markets; and
   determining trading volumes to be traded in the plurality of trading markets on a basis of the index.

FIG. 1

EP 3 876 180 A1

FIG. 2

| TRADING DATE | DAY | BID UNIT TIME FRAME | SPOT MARKET PRICE | PRE-MARKET TRADING MARKET PRICE (AVERAGE VALUE) |
|---|---|---|---|---|
| 2018/4/1 | SUNDAY | 1 | 7.58 | 7.62 |
| 2018/4/1 | SUNDAY | 2 | 7.32 | 7.52 |
| 2018/4/1 | SUNDAY | 3 | 6.9 | 7.5 |
| 2018/4/1 | SUNDAY | 4 | 6.84 | 7.56 |
| 2018/4/1 | SUNDAY | 5 | 6.92 | 6.89 |
| 2018/4/1 | SUNDAY | 6 | 7.55 | 7.83 |
| 2018/4/1 | SUNDAY | 7 | 7.51 | 7.77 |
| 2018/4/1 | SUNDAY | 8 | 7.32 | 7.63 |
| 2018/4/1 | SUNDAY | 9 | 7.03 | 7.08 |
| ⋮ | ⋮ | ⋮ | ⋮ | ⋮ |
| 2018/9/8 | MONDAY | 38 | 12.12 | 9.09 |
| 2018/9/8 | MONDAY | 39 | 12.12 | 9.31 |
| 2018/9/8 | MONDAY | 40 | 11.51 | 8.06 |
| 2018/9/8 | MONDAY | 41 | 11.31 | 7.46 |
| 2018/9/8 | MONDAY | 42 | 11.44 | 7.4 |
| 2018/9/8 | MONDAY | 43 | 10.89 | 7.15 |
| 2018/9/8 | MONDAY | 44 | 10.74 | 6.77 |
| 2018/9/8 | MONDAY | 45 | 10.86 | 7.28 |
| 2018/9/8 | MONDAY | 46 | 10.75 | 6.87 |
| 2018/9/8 | MONDAY | 47 | 10.35 | 7.09 |
| 2018/9/8 | MONDAY | 48 | 10.09 | 6.93 |

FIG. 3

| TRADING DATE | DAY | BID UNIT TIME FRAME | SPOT MARKET PRICE | PRE-MARKET TRADING MARKET PRICE (AVERAGE VALUE) | SIMILARITY SCORE |
|---|---|---|---|---|---|
| 2018/4/10 | TUESDAY | 2 | 8.45 | 8.43 | 0.1 |
| 2018/4/9 | MONDAY | 2 | 7.67 | 8.12 | 0.1 |
| 2018/4/8 | SUNDAY | 2 | 7.71 | 8.12 | 0.1 |
| 2018/4/7 | SATURDAY | 2 | 8.89 | 8.67 | 0.1 |
| 2018/4/6 | FRIDAY | 2 | 8.2 | 7.96 | 0.1 |
| 2018/4/5 | THURSDAY | 2 | 6.79 | 7.06 | 0.1 |
| 2018/4/4 | WEDNESDAY | 2 | 6.96 | 6.31 | 0.1 |
| 2018/4/3 | TUESDAY | 2 | 6.69 | 6.29 | 0.1 |
| 2018/4/2 | MONDAY | 2 | 6.44 | 7 | 0.1 |
| 2018/4/1 | SUNDAY | 2 | 7.32 | 7.52 | 0.1 |

FIG. 4

| TRADING DATE | DAY | BID UNIT TIME FRAME | SPOT MARKET PRICE | PRE-MARKET TRADING MARKET PRICE (AVERAGE VALUE) | SIMILARITY SCORE |
|---|---|---|---|---|---|
| 2018/4/10 | TUESDAY | 2 | 8.45 | 8.43 | 0.169 |
| 2018/4/9 | MONDAY | 2 | 7.67 | 8.12 | 0.155 |
| 2018/4/7 | SATURDAY | 2 | 8.89 | 8.67 | 0.141 |
| 2018/4/6 | FRIDAY | 2 | 8.2 | 7.96 | 0.127 |
| 2018/4/5 | THURSDAY | 2 | 6.79 | 7.06 | 0.113 |
| 2018/4/4 | WEDNESDAY | 2 | 6.96 | 6.31 | 0.099 |
| 2018/4/3 | TUESDAY | 2 | 6.69 | 6.29 | 0.085 |
| 2018/4/2 | MONDAY | 2 | 6.44 | 7 | 0.070 |
| 2018/4/8 | SUNDAY | 2 | 7.71 | 8.12 | 0.028 |
| 2018/4/1 | SUNDAY | 2 | 7.32 | 7.52 | 0.014 |

FIG. 5

(A) CASE WHERE BID QUANTITY PROPORTION FOR SPOT MARKET IS 0.5

(B) CASE WHERE BID QUANTITY PROPORTION FOR SPOT MARKET IS 0.2

FIG. 6

EP 3 876 180 A1

FIG. 7

EP 3 876 180 A1

| DATE | HOURS | SPOT PRICE PREDICTED VALUE | PRE-MARKET MARKET PRICE AVERAGE PREDICTED VALUE | RECOMMENDED STRATEGY | SPOT BID QUANTITY PROPORTION | TRADE-OFF |
|---|---|---|---|---|---|---|
| 2018/12/13 | 1 | 11.16 | 10.61 | | | |
| 2018/12/13 | 2 | 11.16 | 10.53 | | | |
| 2018/12/13 | 3 | 10.99 | 10.28 | | | |
| 2018/12/13 | 4 | 10.94 | 8.77 | | | |
| 2018/12/13 | 5 | 10.91 | 9.26 | | | |
| 2018/12/13 | 6 | 10.91 | 9.37 | | | |
| 2018/12/13 | 7 | 10.91 | 9.18 | | | |
| 2018/12/13 | 8 | 10.91 | 9.29 | | | |
| 2018/12/13 | 9 | 10.97 | 9.39 | | | |
| 2018/12/13 | 10 | 10.97 | 9.31 | | | |
| 2018/12/13 | 11 | 11.16 | 9.5 | | | |
| 2018/12/13 | 12 | 11.16 | 10.39 | | | |
| 2018/12/13 | 13 | 11.85 | 11.79 | | | |
| 2018/12/13 | 14 | 14.88 | 12.42 | | | |
| 2018/12/13 | 15 | 20 | 15.98 | | | |
| 2018/12/13 | 16 | 20 | 17.46 | | | |
| 2018/12/13 | 17 | 13.35 | 26.25 | | | |
| **2018/12/13** | **18** | **15** | **23.31** | **MAXIMUM** | **0** | **0** |
| **2018/12/13** | **19** | **14.72** | **22.64** | **MAXIMUM** | **0** | **0** |
| 2018/12/13 | 20 | 12.78 | 24.65 | | | |
| 2018/12/13 | 21 | 11.6 | 18.48 | | | |
| 2018/12/13 | 22 | 11.39 | 17.78 | | | |
| 2018/12/13 | 23 | 11.12 | 18.53 | | | |
| 2018/12/13 | 24 | 11.12 | 16.11 | | | |
| 2018/12/13 | 25 | 10.74 | 16.9 | | | |
| 2018/12/13 | 26 | 10.74 | 12.34 | | | |
| 2018/12/13 | 27 | 11.33 | 13.66 | | | |
| 2018/12/13 | 28 | 11.33 | 13.34 | | | |
| 2018/12/13 | 29 | 11.64 | 12.47 | | | |
| 2018/12/13 | 30 | 11.71 | 13.9 | | | |
| 2018/12/13 | 31 | 13.33 | 18.56 | | | |
| 2018/12/13 | 32 | 16.04 | 16.17 | | | |
| 2018/12/13 | 33 | 18.57 | 13.75 | | | |
| **2018/12/13** | **34** | **24** | **16.94** | **BEAR50** | **0.4** | **1** |
| **2018/12/13** | **35** | **24.8** | **17.56** | **BEAR50** | **1** | **0** |
| **2018/12/13** | **36** | **24.8** | **18.02** | **BEAR50** | **0.8** | **1** |
| **2018/12/13** | **37** | **24.8** | **17.08** | **BEAR20** | **1** | **1** |
| **2018/12/13** | **38** | **24.8** | **16.31** | **BEAR20** | **0.2** | **1** |
| **2018/12/13** | **39** | **20.05** | **14.26** | **BEAR20** | **0.8** | **1** |
| **2018/12/13** | **40** | **20.05** | **14.97** | **BEAR20** | **0** | **1** |
| **2018/12/13** | **41** | **16.61** | **13.08** | **MAXIMUM** | **1** | **0** |
| 2018/12/13 | 42 | 15 | 13.42 | | | |
| 2018/12/13 | 43 | 13.35 | 13.09 | | | |
| 2018/12/13 | 44 | 13.35 | 12.45 | | | |
| 2018/12/13 | 45 | 15.27 | 13.43 | | | |
| 2018/12/13 | 46 | 15.27 | 13.53 | | | |
| 2018/12/13 | 47 | 12.19 | 12.44 | | | |
| 2018/12/13 | 48 | 11.48 | 11.9 | | | |

# FIG. 8

FIG. 9

ESTIMATED PRICE

**FIG. 10**

RISK RETURN INDEX

G4

G1

G2

0

BID QUANTITY PROPORTION
FOR SPOT TRADING MARKET

1

(A) CASE WHERE TRADE-OFF DOES NOT OCCUR

RISK RETURN INDEX

G24

G21

G22

0

BID QUANTITY PROPORTION
FOR SPOT TRADING MARKET

1

(B) CASE WHERE TRADE-OFF OCCURS

# FIG. 11

START

DESIGNATE TRADING TARGET DATE
AND SELECT BID UNIT TIME FRAME — STEP1

SELECT TRADING STRATEGY
IN TARGET BID UNIT TIME FRAME — STEP2

EXTRACT CASE DATA FOR WHICH SIMILARITY SCORES ARE EQUAL
TO OR HIGHER THAN THRESHOLD OR A PREDETERMINED NUMBER
OF PIECES OF CASE DATA IN DESCENDING ORDER
OF SIMILARITY SCORE FROM PAST CASE DATA — STEP3

TENTATIVELY SET PROPORTIONS OF ELECTRIC POWER ENERGY
TO BE BID FOR RESPECTIVE ELECTRIC POWER TRADING MARKETS — STEP4

CALCULATE EARNINGS IN A CASE WHERE IT IS ASSUMED
THAT ELECTRIC POWER ENERGY ARE BID AT TENTATIVELY SET PROPORTIONS
AT RESULT PRICE IN EACH PIECE OF SIMILAR CASE DATA,
AND CALCULATE PSEUDO CONDITIONAL OCCURRENCE PROBABILITY DISTRIBUTION
OF EARNINGS WHILE SIMILARITY SCORE IS REGARDED AS FREQUENCY (PROBABILITY) — STEP5

CALCULATE RISK RETURN INDEX CORRESPONDING
TO TRADING STRATEGY — STEP6

STEP7
IS VALUE OF RISK RETURN
INDEX OPTIMAL?
NO
YES

SET OPTIMAL BID QUANTITY PROPORTIONS
AT PRESENT MOMENT AS PARAMETER — STEP8

STEP9
ARE END CONDITIONS SATISFIED?
NO
YES

OUTPUT OPTIMAL BID QUANTITY PROPORTIONS
FOR RESPECTIVE ELECTRIC POWER TRADING MARKETS,
PSEUDO PROBABILITY DISTRIBUTION AND RISK RETURN INDEX — STEP10

END

FIG. 12

FIG. 13

EP 3 876 180 A1

| POINT ID | DATE | TIME | TEMPERATURE [°C] | INTENSITY OF SOLAR RADIATION [MJ/m²] | WIND VELOCITY [m/s] | AMOUNT OF PRECIPITATION [mm] |
|---|---|---|---|---|---|---|
| ... | ... | ... | ... | ... | ... | ... |
| 001 | 2018/10/01 | 0:00 | 11.2 | 0.0 | 3.4 | 0.0 |
| 001 | 2018/10/01 | 0:30 | 10.9 | 0.0 | 3.5 | 0.5 |
| 001 | 2018/10/01 | 1:00 | 10.3 | 0.0 | 2.9 | 1.5 |
| 001 | 2018/10/01 | 1:30 | 10.1 | 0.0 | 3.9 | 2.0 |
| 001 | 2018/10/01 | 2:00 | 10.0 | 0.0 | 3.9 | 1.2 |
| 001 | 2018/10/01 | 2:30 | 10.0 | 0.0 | 4.9 | 1.0 |
| 001 | 2018/10/01 | 3:00 | 9.9 | 0.0 | 4.1 | 2.5 |
| 001 | 2018/10/01 | 3:30 | 10.3 | 0.0 | 4.8 | 1.5 |
| 001 | 2018/10/01 | 4:00 | 10.5 | 0.0 | 5.4 | 3.5 |
| 001 | 2018/10/01 | 4:30 | 11.1 | 0.0 | 5.8 | 2.0 |
| 001 | 2018/10/01 | 5:00 | 11.5 | 0.0 | 4.6 | 2.0 |
| 001 | 2018/10/01 | 5:30 | 11.7 | 0.0 | 6.0 | 1.0 |
| ... | ... | ... | ... | ... | ... | ... |

# FIG. 14

| TRADING DATE | DAY | BID UNIT TIME FRAME | SPOT MARKET PRICE | PRE-MARKET TRADING MARKET PRICE (AVERAGE VALUE) | TEMPERATURE | INTENSITY OF SOLAR RADIATION |
|---|---|---|---|---|---|---|
| 2018/4/1 | SUNDAY | 1 | 7.58 | 7.62 | 10.3 | 0 |
| 2018/4/1 | SUNDAY | 2 | 7.32 | 7.52 | 7.3 | 0 |
| 2018/4/1 | SUNDAY | 3 | 6.9 | 7.5 | 7.8 | 0 |
| 2018/4/1 | SUNDAY | 4 | 6.84 | 7.56 | 9.1 | 0 |
| 2018/4/1 | SUNDAY | 5 | 6.92 | 6.89 | 9.5 | 0 |
| 2018/4/1 | SUNDAY | 6 | 7.55 | 7.83 | 9.8 | 0 |
| 2018/4/1 | SUNDAY | 7 | 7.51 | 7.77 | 10.3 | 0 |
| 2018/4/1 | SUNDAY | 8 | 7.32 | 7.63 | 10.1 | 0,3 |
| 2018/4/1 | SUNDAY | 9 | 7.03 | 7.08 | 8.7 | 1.2 |
| ⋮ | ⋮ | ⋮ | ⋮ | ⋮ | ⋮ | ⋮ |
| 2018/9/8 | MONDAY | 38 | 12.12 | 9.09 | 7.3 | 0 |
| 2018/9/8 | MONDAY | 39 | 12.12 | 9.31 | 7.8 | 0 |
| 2018/9/8 | MONDAY | 40 | 11.51 | 8.06 | 9.1 | 0 |
| 2018/9/8 | MONDAY | 41 | 11.31 | 7.46 | 10.3 | 0 |
| 2018/9/8 | MONDAY | 42 | 11.44 | 7.4 | 10.3 | 0 |
| 2018/9/8 | MONDAY | 43 | 10.89 | 7.15 | 10.1 | 0 |
| 2018/9/8 | MONDAY | 44 | 10.74 | 6.77 | 8.7 | 0 |
| 2018/9/8 | MONDAY | 45 | 10.86 | 7.28 | 7.3 | 0 |
| 2018/9/8 | MONDAY | 46 | 10.75 | 6.87 | 7.8 | 0 |
| 2018/9/8 | MONDAY | 47 | 10.35 | 7.09 | 9.1 | 0 |
| 2018/9/8 | MONDAY | 48 | 10.09 | 6.93 | 10.3 | 0 |

FIG. 15

600

~607

604

COMMUNICATION
DEVICE

601

CPU

602

INPUT
INTERFACE

605

MAIN MEMORY

603

DISPLAY DEVICE

606

EXTERNAL
MEMORY

# FIG. 16

Europäisches
Patentamt

European
Patent Office

Office européen
des brevets

# EUROPEAN SEARCH REPORT

Application Number

EP 20 19 5267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/012687 A1 (ENDOH YUSUKE [JP] ET AL) 10 January 2019 (2019-01-10) * the whole document * | 1-18 | INV. G06Q40/04 G06Q40/06 |
| X | JP 5 072307 B2 (CHUGOKU ELECTRIC POWER) 14 November 2012 (2012-11-14) * the whole document * | 1-18 | |
| X | US 2019/130423 A1 (WATANABE TOHRU [JP] ET AL) 2 May 2019 (2019-05-02) * the whole document * | 1-18 | |
| X | US 2014/188695 A1 (MAEGAWA TOMONORI [JP] ET AL) 3 July 2014 (2014-07-03) * the whole document * | 1-18 | |
| X | US 2019/252880 A1 (WATANABE TOHRU [JP] ET AL) 15 August 2019 (2019-08-15) * the whole document * | 1-18 | |

TECHNICAL FIELDS
SEARCHED      (IPC)

G06Q

The present search report has been drawn up for all claims

| Place of search | Date of completion of the search | Examiner |
|---|---|---|
| The Hague | 19 October 2020 | De Smet, Michaël |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 19 5267

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2020

| Patent document cited in search report | | Publication date | Patent family member(s) | | Publication date |
|---|---|---|---|---|---|
| US 2019012687 | A1 | 10-01-2019 | JP<br>US | 2019016110 A<br>2019012687 A1 | 31-01-2019<br>10-01-2019 |
| JP 5072307 | B2 | 14-11-2012 | JP<br>JP | 5072307 B2<br>2008084095 A | 14-11-2012<br>10-04-2008 |
| US 2019130423 | A1 | 02-05-2019 | JP<br>US | 2019082935 A<br>2019130423 A1 | 30-05-2019<br>02-05-2019 |
| US 2014188695 | A1 | 03-07-2014 | NONE | | |
| US 2019252880 | A1 | 15-08-2019 | EP<br>JP<br>US<br>WO | 3611688 A1<br>2018163516 A<br>2019252880 A1<br>2018174030 A1 | 19-02-2020<br>18-10-2018<br>15-08-2019<br>27-09-2018 |

EPO FORM P0459

For more details about this annex : see Official Journal of the European Patent Office, No. 12/82